# EUROPEAN PATENT SPECIFICATION

(11) **EP 2 984 250 B1**
(45) Date of publication and mention of the grant of the patent: **06.06.2018**
(21) Application number: 14716804.1
(22) Date of filing: 09.04.2014
(51) Int. Cl.: E04F 15/10

(54) **FLOOR COVERING**
BODENBELAG
REVÊTEMENT DE SOL

(30) Priority: 12.04.2013 EP 13163465
(43) Date of publication of application: 17.02.2016
(73) Proprietor: Tarkett GDL, 9779 Lentzweiler (LU)
(72) Inventor: SIMON, Jean-Yves, 9779 Lentzweiler (LU); PARMENTIER, Agnès, 9779 Lentzweiler (LU); CANCELLIER, Michel, 9779 Lentzweiler (LU); CORNEZ, Benjamin, 9779 Lentzweiler (LU)
(74) Representative: Bruck, Mathis
(86) International application number: PCT/EP2014/057164
(87) International publication number: WO 2014/167002

(56) References cited:
- EP-A1- 0 715 037
- WO-A1-2008/008824
- WO-A2-2011/035175
- US-A- 4 444 313
- US-A1- 2007 113 502
- US-A1- 2008 010 930
- US-A1- 2011 056 167

## Description

### Subject of the Invention

The present invention relates to a resilient polymer-based surface covering element in the form of a long strip comprising connecting means and relates to a polymer-based surface covering comprising such element.

### Prior art

Polymer-based surface coverings, also called polymeric or synthetic surface coverings are well known. Generally they are made of rubber, polyolefins, polyesters, polyamides or PVC. They present specific mechanical properties, particularly in terms of mechanical resistance, wear and indentation resistance, but also in terms of comfort, softness, sound and heat insulation.

Among polymer-based surface coverings, substrate-free surface coverings and multilayer surface coverings are also well known.

Substrate-free surface coverings, or homogenous surface coverings, are coverings comprising agglomerated particles, generally obtained by cutting or shredding a sheet made from a composition which comprises a polymer-based material and wherein no bottom layer, or substrate, is used.

Multilayer surface coverings are coverings comprising at least a lower layer being a support layer and an upper layer being a wear layer. Furthermore, these coverings are referred to be decorative as they generally comprise a decorative pattern imitating the aesthetic appearance of natural floorings such as wood or stone floorings. This decorative pattern is generally printed on one of the faces of the support layer or the wear layer of the floor covering, or sometimes on an additional synthetic layer which is inserted between the support layer and the wear layer.

Polymer-based surface coverings, in particular floor coverings, are generally in the form of a single roll of a wide length and a wide width to be installed in one piece, or in the form of surface covering elements, or tiles, to be laid adjacent one to another on the surface to cover.

However, WO 2010/094597 discloses synthetic floor coverings in the form of a strip having a width corresponding to the width of a natural floor covering element to be imitated and a length corresponding to the length of at least two natural floor covering elements to be imitated.

US20070113502 A1 discloses a polymer-based surface covering element which can be rolled up.

Whatever the form of the polymer-based surface coverings, the surface covering or surface covering elements are laid on the floor using adhesive means, generally a glue, which have the drawback of being not easy to use, in particular if the glue is spread on the surface (floor for example) to cover before the surface covering or surface covering elements are laid.

The glue may be provided on the face of the surface covering entering into contact with the surface to cover, thus a protective sheet or paper should be remove before the surface covering or surface covering elements can be laid on the surface to cover. However, this solution presents the drawback of needing a supplementary manipulation.

Therefore there is a need for polymer-based surface covering elements in the form of strips easy to manipulate and to use.

### Aims of the invention

The present invention provides a solution that does not present the drawbacks of the prior art.

It provides an polymer-based surface covering element easy to install and a polymer-based surface covering being dimensional stable without the use of a glue.

### Summary of the invention

The present invention describes a resilient polymer-based surface covering element according to claim 1.

According to particular embodiments, the resilient polymer-based surface covering element comprises one or a suitable combination of any of the following characteristics:
- the connection means are provided along the entire length and/or width of said surface covering element,
- the connection means form a tongue and groove engagement,
- the connection means form puzzle type of engagement,
- the surface covering element is made of PVC, polyolefin, reticulated and non-reticulated elastomer,
- the surface covering element is a multilayer covering comprising a support layer and a wear layer.

According to a particularly preferred aspect of the invention, the resilient polymer-based surface covering element is configured as a roll, e.g. a flooring roll, to be laid out by unrolling from the roll. The surface covering element is in this case wound up (on a cylindrical core or without any core) in the direction of its long edge, the short edges being parallel to the axis of the roll. In the case of a flooring roll, a male portion of the connection means is provided on one long edge of the surface covering element and a female portion of the connection means is provided on the other long edge of the surface covering element, the male and female portions being mutually complementary. The width of the flooring roll, i.e. the width of the wound up surface covering element preferably amounts to between 6 cm and 40 cm, more preferably between 10 cm and 30 cm. The length preferably ranges from 5 m to 30 m.

### Brief description of figures

Figure 1 is a schematic representation of an upper view of a surface covering element according to the invention imitating a wood covering.
Figure 2 is a first schematic representation of a transversal view of a not claimed surface covering.
Figure 3 is a second schematic representation of a transversal view of a not claimed surface covering.
Figure 4 is a third schematic representation of a transversal view of a first embodiment of the surface covering according to the invention.
Figure 5 is a first schematic representation of a transversal view of a not claimed surface covering.
Figure 6 is a second schematic representation of a transversal view of a not claimed surface covering.
Figure 7 is a third schematic representation of a transversal view of a second embodiment of the surface covering according to the invention.
Figure 8 is a first schematic representation of a transversal view of a not claimed surface covering.
Figure 9 is a second schematic representation of a transversal view of a not claimed surface covering.
Figure 10 is a third schematic representation of a transversal view of a third embodiment of the surface covering according to the invention.
Figure 11 a schematic representation of an upper view of a plurality of surface covering elements imitating a wood covering being connected together.
Figure 12 a schematic representation of a transversal view of a plurality of surface covering elements of the third embodiment being connected together.
Figure 13 a schematic representation of a flooring roll according to a preferred aspect of the invention.

### Detailed description of the invention

The polymer-based surface covering element 1 according to the invention is a resilient polymer-based element 1. Preferably, it fulfills the recommendation of the norm ISO 10581.

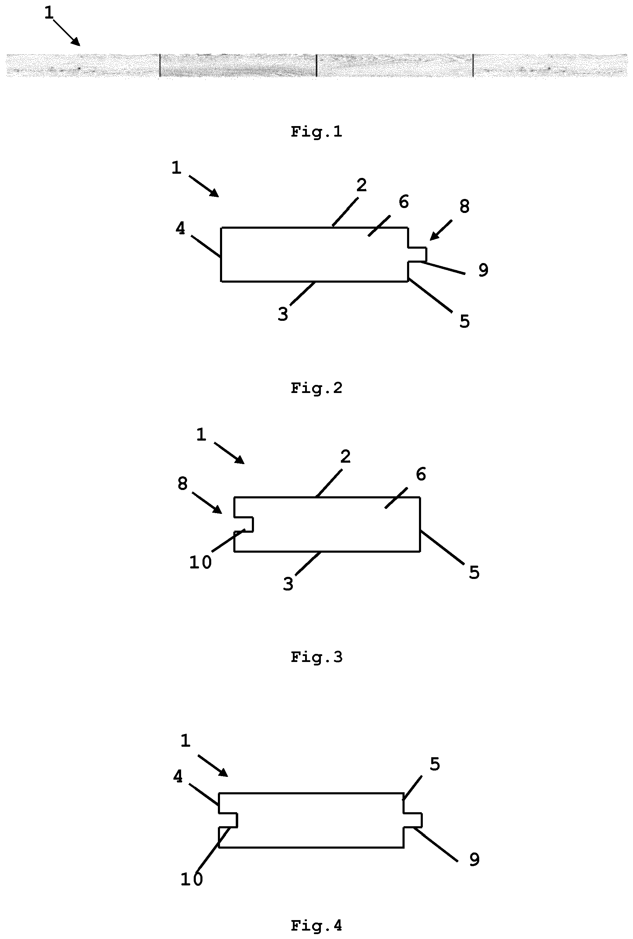

The polymer-based surface covering element 1 is in the form of a strip having a length higher than its width (figure 1), preferably its length is more than twice its width, i.e. the length-to-width ratio being equal or more than 8. Preferably, the length-to-width ratio is comprised between 8 and 300, more preferably between 8 and 40, 20 to 150, or 60 to 300, even more preferably between 80 and 120.

For example, the width of the polymer-based surface covering element 1 may be comprised between 10 cm to 50 cm, preferably between 10 to 20 cm for a length comprised between 400 cm to 3000 cm.

A polymer-based surface covering element 1 in the form of a strip has the advantage of allowing surface covering elements to be packed in small rolls easy to handle, to transport, to store and to lay out, especially by a single individual.

The polymer-based surface covering element 1 according to the invention comprises an upper surface 2, a lower surface 3 opposed to the upper surface 2, and four edges 4, 5, 6, 7, said edges being provided between the upper surface 2 and the lower surface 3 (figures 2 to 10).

The polymer-based surface covering element 1 comprises connection means 8 to couple, or join, together a first surface covering elements 1 with at least a second, preferably a plurality of, surface covering elements 1.

The connection means 8 may be provided, continuously or discontinuously, on the upper surface 2 and/or lower surface 3 of the surface covering element 1, and/or on one edge or a plurality of edges 4, 5, 6, 7 of the surface covering element 1, or a combination thereof.

Preferably, the connection means 8 are provided on two opposite edges (4 and 5 or 6 and 7), of the surface covering elements 1.

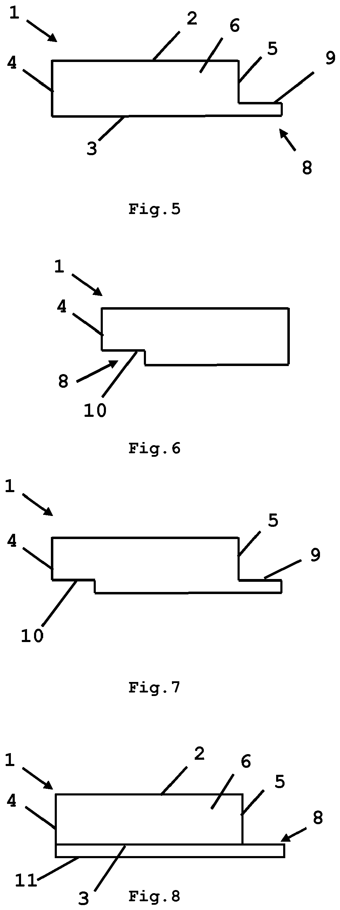

In an embodiment, the connection means 8 comprise a male portion complementary to and for cooperation with a female potion of another surface covering element 1, the male portion extending outwardly from one edge or a plurality of adjacent or opposite edges (figures 2 and 5). Preferably, the male portion extends along a portion or the entire length and/or width of the surface covering elements 1.

In another embodiment, the connection means 8 comprise a female portion complementary to and for cooperation with a male potion of another surface covering element 1 (figures 3 and 6). Preferably, the female portion extends inwardly from one edge or a plurality of adjacent or opposite edges. Preferably, the female portion extends along a portion or the entire length and/or width of the surface covering elements 1.

In a preferred embodiment, the connection means comprise a male portion extending outwardly from one edge or a plurality of adjacent or opposite edges and a female portion extending inwardly from one edge or a plurality of adjacent or opposite edges (figures 4 and 7), the male and female portions, being complementary to and for cooperation with respectively the female and male potions of another surface covering element 1. Preferably, the male and female portions extend along a portion or the entire length of the surface covering elements 1.

Preferably, the male portion is a tongue and the female portion is a groove extending from the middle of the edge or edges (figures 2 to 4), extending from the lower portion of the edges or edges (figures 5 to 7) or extending from the upper portion of the edges or edges (not shown).

Preferably, the connection means 8 form a puzzle type engagement.

In a another preferred embodiment, the surface covering element 1 comprise a layer 11 connected by any suitable means to the lower surface 3 of said surface covering element 1. The connection means 8 may thus comprise a male portion made by the layer 11 extending outwardly from, and under, one edge or a plurality of adjacent or opposite edges of the surface covering element 1 (figure 8). The male portion may comprise, or not, adhesive means, for example a glue, to allow connecting another surface covering element 1, which may comprise, or not, connection means 8 complementary and for cooperation with the male portion of said layer 11.

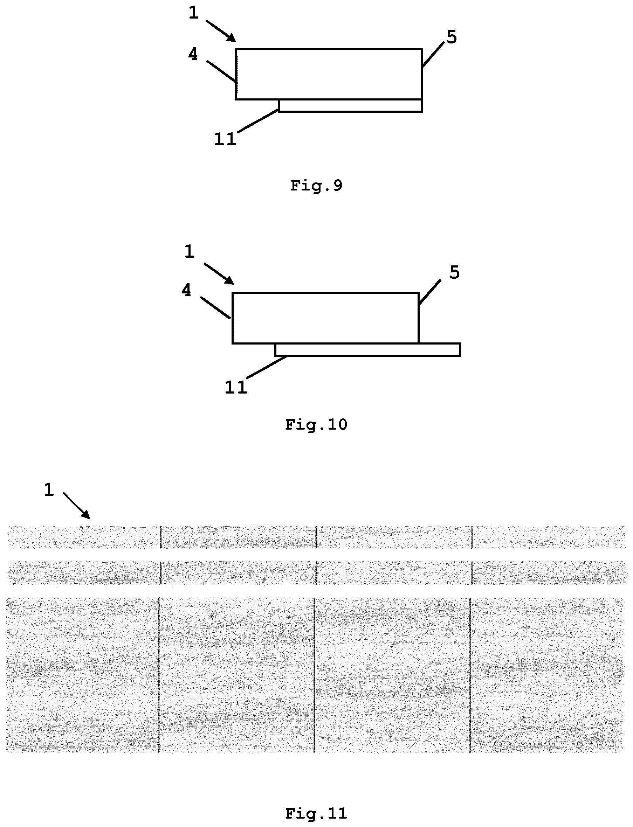

In this embodiment, the surface covering element 1 may comprise a female portion made by the layer 11 extending inwardly from, and under, one edge or a plurality of adjacent or opposite edges of the surface covering element 1 (figure 9). The female portion may comprise, or not, adhesive means, for example a glue, to allow connecting another surface covering element 1 which may comprise or not connection means 8 complementary and for cooperation with the female portion of the layer 11.

In this embodiment, the surface covering element 1 may comprise a male portion made by the layer 11 extending outwardly from, and under, one edge or a plurality of adjacent or opposite edges of the surface covering element 1 and a female portion made by the layer 11 extending inwardly from, and under, one edge or a plurality of adjacent or opposite edges of the surface covering element 1 (figure 10). The male and/or female portions comprise adhesive means, for example a glue, to allow connecting another surface covering element 1, which may comprise, or not, connection means 8 complementary and for cooperation with the female and or male portion of said layer 11.

The connection means 8 may be produce by cutting, laser or water jet cutting, milling, drilling, moulding, planning the surface covering element 1 or by adding a layer 11 to a previously manufactured surface covering element 1 or during the manufacturing of the surface covering element 1.

The polymer-based floor covering element 1 is made of a polymeric material or a thermoplastic resin. Preferably, it is made of rubber, polyvinyl chloride, reticulated and non-reticulated elastomers, polyesters, poly-olefins, such as for example polypropylene or polyethylene, vulcanised resins, such as SBS (Styrene butadiene Styrene) for example, or cross-linked resins such as SBR (Styrene Butadiene Rubber) for example.

Preferably, the polymer-based floor covering element 1 is made of polyvinyl chloride.

The polymer-based floor covering element 1 may be an homogenous (substrate-free) or multiple layer surface covering element. Preferably, it is a product listed according to European standard EN 651, polyolefin-based floor covering element, polyvinyl chloride-based floor covering element according to standard EN 653, or expanded polyvinyl chloride-based floor coverings according to standard EN 649.

Preferably, the polymer-based surface covering element 1 comprises a decorative pattern that imitates elements of natural surface coverings joined together one after the others. Therefore, the polymer-based surface covering element 1 is strip having a width corresponding to the width of a natural surface covering element to be imitated, namely to the width of a wooden slat, a stone or a floor tile for example and a length corresponding to the length of at least two natural surface covering elements to be imitated joined together. Considering that a decorative module reproduces, in terms of aesthetics and dimensions, an element of natural surface covering (wooden slat, a stone, a floor tile for example), the surface covering element 1 may thus comprise at least two, preferably a plurality, of such decorative modules, one after the other, separated by a pattern reproducing a joint connecting the elements of natural surface covering to be imitated.

Preferably, the length of the decorative modules is a function of the natural surface covering elements to be imitated. Their length is modulated by the frequency of the appearance of the pattern imitating the joint in the natural pattern of the surface covering according element 1. For example, for surface covering element 1 imitating a wooden slat, the pattern imitating the joint can be repeated in the natural wood pattern every 33 cm to 200 cm.

In this embodiment, the surface covering element 1 preferably may comprise the same type of decorative pattern along the entire length of the strip, a decorative pattern that can be identical or different in terms of appearance, tint or colour. For example, in a surface covering element 1 imitating a panel of wood, the decorative wood pattern can have a colour, tint, and graining identical the entire length of the strip of the surface covering element 1. Nevertheless, the graining reproduced can also be different from one decorative module to another. However, one or both ends of the surface covering element 1 can comprise a decorative module having a length different from the other decorative modules that make the surface covering element 1, for example, a length that corresponds to a half-length of the other modules. Thus, when laying the surface covering element 1, the decorative modules of a strip are shifted in relation to the decorative modules of an adjacent strip, thereby giving the surface covered the appearance of true wood covering.

In this embodiment, the decorative pattern reproduces the aesthetic appearance of any element of natural surface covering, whether it is a strip of wood, a strip of bamboo, a marble floor tile, tiling, terra cotta, stone, granite, slate, pebbles or mosaics. Thus, the decorative modules of the surface covering element 1 reproduces the aesthetic appearance, but also the dimensions of any elements of natural floor covering. Preferably, the decorative pattern reproduces also the dimensions and the aesthetic appearance of any joints connecting the natural elements to be imitated. The joint pattern can be more or less thick or pronounced, and thus more or less discrete. The pattern can be a more or less thick line, more or less pronounced, or can be the demarcation between different structures or colours of the decorative pattern.

The polymer-based surface covering element 1 according to the invention is obtained by producing a decorated homogenous or multiple layer intermediate product, not intended to be used as surface covering, and may comprise, or not, a decorative pattern, imitating for example a natural pattern (wood, stone...) and a pattern imitating a joint. The intermediate product is then cut, using appropriate means, into strips having the length and width according to the invention. The strips my then be processed to produce connection means 8.

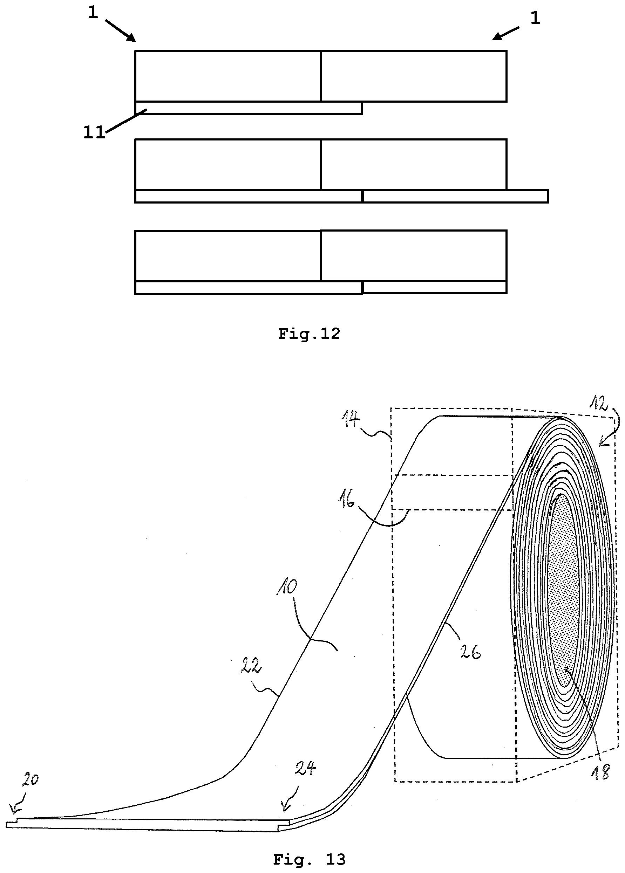

The surface covering according to the invention comprises one or more surface covering element 1 according to the invention (figure 11). The surface covering may also comprise one or more elements to be joined in the form of a strip as describe but without connection means (8) (figure 12), the surface covering elements 1 comprising connection means (8) being connected to surface covering elements 1 comprising, or not, connection means (8).

The installation of the surface covering according to the invention is very easy and do not need the use of a glue to connect a surface covering element 1 to another. A first surface covering element 1 is laid on the surface to cover, for example on a corner, and a second surface covering element 1 is connected to the first one by means of the connection means 8, said second surface covering element 1 may comprise or not complementary connection means 8 (figure 12).

As illustrated in figure 13, the surface covering element 10 takes the form of a roll 12 e.g. packaged in a dispenser box 14. The surface covering element 10 is laid out by unrolling it from the roll 12 and pulling it through an aperture 16 in the dispenser box 14. In the box, the surface covering element may be wound up on a cylindrical core 18 (e.g. made from paperboard or whatever the material of the box 14 is.) A male portion 20 of the connection means extends along the long edge 22 of the surface covering element 10. The female portion 24 of the connection means extends along the opposite long edge 26. The male and female portions 20, 24 are of complementary shapes.

The width of the roll 12, i.e. the distance between the long edges 22, 26 of the surface covering element 10 preferably amounts to between 6 cm and 40 cm, more preferably between 10 cm and 30 cm. Its length preferably ranges from 5 m to 30 m.

The surface covering element 10 preferably comprises an adhesive on the male and/or the female connecting portion 20, 24. The adhesive is protected by a release liner (not shown) to be taken off immediately before assembling two neighbouring surface covering elements. The surface covering element need not comprise any adhesive on its bottom surface 28.

## Claims

1. A resilient polymer-based surface covering element (1)comprising an upper surface (2), a lower surface (3), side edges provided between said upper surface (2) and said lower surface (3), and connection means (8) to join two or more surface covering elements (1), wherein said surface covering element is a strip provided as a roll (12) to be laid out by unrolling from said roll (12), and said connection means comprise a male portion (20) on one long edge (22) of said strip and a female portion (24) on the other long edge (26) of said strip, said male and female portions being mutually complementary in shape;
**characterized in that**
said male portion and/or said female portion of said connection means comprises an adhesive protected by a release liner and **in that** said roll (12) is packaged in a dispenser box (14) with an aperture (16), so that the surface covering element can be laid out by unrolling it from the roll (12) and pulling it through said aperture (16).

2. The resilient polymer-based surface covering element (1) according to claim 1, wherein the connection means (8) are provided continuously along the entire length of said surface covering element (1).

3. The resilient polymer-based surface covering element (1) according to any of the preceding claims, wherein the connection means (8) form a tongue and groove engagement.

4. The resilient polymer-based surface covering element (1) according to any of the preceding claims, wherein the connection means (8) form puzzle type of engagement.

5. The resilient polymer-based surface covering element (1) according to any of the preceding claims, being made of PVC, polyolefin, reticulated and non-reticulated elastomer.

6. The resilient polymer-based surface covering element (1) according to any of the preceding claims, being a multilayer covering comprising a support layer and a wear layer.

7. The resilient polymer-based surface covering element according to any of the preceding claims, wherein the width of said surface covering element is between 6 cm and 40 cm, preferably between 10 cm and 30 cm.

8. The resilient polymer-based surface covering element according to any one of the preceding claims, wherein the roll (12) is wound up on a cylindrical core (18) in the dispenser box (14).

9. The resilient polymer-based surface covering element according to any of the preceding claims, wherein the length of the strip ranges from 4 m to 30 m, preferably 5 m to 30 m.

10. The resilient polymer-based surface covering element according to any of the preceding claims, wherein its bottom surface does not comprise any adhesive.

11. The resilient polymer-based surface covering element according to any of the preceding claims, which is a resilient floor covering fulfilling the recommendation of the norm ISO 10581.

12. A method for installing a resilient polymer-based surface covering comprising the steps of:
providing a surface covering element (1) as claimed in any one of the preceding claims;
laying out said surface covering element (1) by unrolling from said roll (12) and pulling it through said aperture (16) of said dispenser box (14).

## Patentansprüche

1. Nachgiebiges Flächenabdeckelement (1) auf Polymerbasis, umfassend eine Oberseite (2), eine Unterseite (3), Seitenränder, die zwischen der Oberseite (2) und der Unterseite (3) vorgesehen sind, und Verbindungsmittel (8) zur Verbindung von zwei oder mehr Flächenabdeckelementen (1) wobei das Flächenabdeckelement ein Streifen ist, der als eine Rolle (12) bereitgestellt wird und durch Abrollen von der Rolle (12) ausgelegt werden soll, und das Verbindungsmittel einen männlichen Abschnitt (20) an einer Längskante (22) des Streifens und einen weiblichen Abschnitt (24) an der anderen Längskante (26) des Streifens umfasst, wobei der männliche und der weibliche Abschnitt eine gegenseitige komplementäre Gestalt aufweisen;
**dadurch gekennzeichnet, dass**
der männliche Abschnitt und/oder der weibliche Abschnitt des Verbindungsmittels einen Klebstoff umfasst bzw. umfassen, der durch eine Trennschicht geschützt ist, und dass die Rolle (12) in einer Spenderbox (14) mit einer Öffnung (16) verpackt ist, so dass das Flächenabdeckelement ausgelegt werden kann, indem es von der Rolle (12) abgerollt wird und durch die Öffnung (16) gezogen wird.

2. Nachgiebiges Flächenabdeckelement (1) auf Polymerbasis nach Anspruch 1, wobei die Verbindungsmittel (8) kontinuierlich entlang der gesamten Länge des Flächenabdeckelements (1) vorgesehen sind.

3. Nachgiebiges Flächenabdeckelement (1) auf Polymerbasis nach einem der vorhergehenden Ansprüche, wobei die Verbindungsmittel (8) einen Nut- und Federeingriff bilden.

4. Nachgiebiges Flächenabdeckelement (1) auf Polymerbasis nach einem der vorhergehenden Ansprüche, wobei die Verbindungsmittel (8) einen puzzleförmigen Eingriff bilden.

5. Nachgiebiges Flächenabdeckelement (1) auf Polymerbasis nach einem der vorhergehenden Ansprüche, das aus PVC, Polyolefin, netzförmigem und nicht netzförmigem Elastomer besteht.

6. Nachgiebiges Flächenabdeckelement (1) auf Polymerbasis nach einem der vorhergehenden Ansprüche, das einen mehrschichtigen Belag darstellt, der eine Trägerschicht und eine Abnutzungsschicht umfasst.

7. Nachgiebiges Flächenabdeckelement auf Polymerbasis nach einem der vorhergehenden Ansprüche, wobei die Breite des Flächenabdeckelements zwischen 6 cm und 40 cm, vorzugsweise zwischen 10 cm und 30 cm beträgt.

8. Nachgiebiges Flächenabdeckelement auf Polymerbasis nach einem der vorhergehenden Ansprüche, wobei die Rolle (12) auf einem zylindrischen Kern (18) in der Spenderbox (14) aufgewickelt ist.

9. Nachgiebiges Flächenabdeckelement auf Polymerbasis nach einem der vorhergehenden Ansprüche, wobei die Länge des Streifens im Bereich von 4 m bis 30 m, vorzugsweise 5 m bis 30 m liegt.

10. Nachgiebiges Flächenabdeckelement auf Polymerbasis nach einem der vorhergehenden Ansprüche, wobei seine Unterseite keinen Klebstoff umfasst.

11. Nachgiebiges Flächenabdeckelement auf Polymerbasis nach einem der vorhergehenden Ansprüche, bei dem es sich um einen nachgiebigen Bodenbelag handelt, der die Empfehlung der Norm ISO 10581 erfüllt.

12. Verfahren zum Anbringen eines nachgiebigen Oberflächenbelags auf Polymerbasis, umfassend die folgenden Schritte:
Bereitstellen eines Flächenabdeckelements (1) nach einem der vorhergehenden Ansprüche;
Auslegen des Flächenabdeckelements (1) durch Abrollen von der Rolle (12) und Ziehen durch die Öffnung (16) der Spenderbox (14).

## Revendications

1. Élément de revêtement de surface (1) à base de polymère souple comprenant une surface supérieure (2), une surface inférieure (3), des bords latéraux placés entre ladite surface supérieure (2) et ladite surface inférieure (3), et des moyens de raccordement (8) servant à assembler au moins deux éléments de revêtement de surface (1), ledit élément de revêtement de surface étant une bande fournie sous forme de rouleau (12) destinée à être posée en la déroulant à partir dudit rouleau (12), et lesdits moyens de raccordement comprenant une partie mâle (20) sur un bord long (22) de ladite bande et une partie femelle (24) sur l'autre bord long (26) de ladite bande, lesdites parties mâle et femelle présentant des formes mutuellement complémentaires ;
**caractérisé en ce que**
ladite partie mâle et/ou ladite partie femelle desdits moyens de raccordement comprennent un adhésif protégé par une doublure anti-adhérente et **en ce que** ledit rouleau (12) est emballé dans une boîte de distribution (14) avec une ouverture (16), de telle sorte que l'élément de revêtement de surface puisse être posé en le déroulant à partir du rouleau (12) et en le tirant à travers ladite ouverture (16).

2. Élément de revêtement de surface (1) à base de polymère souple selon la revendication 1, dans lequel les moyens de raccordement (8) sont présents de manière continue le long de toute la longueur dudit élément de revêtement de surface (1).

3. Élément de revêtement de surface (1) à base de polymère souple selon l'une quelconque des revendications précédentes, dans lequel les moyens de raccordement (8) forment un accouplement à languette et rainure.

4. Élément de revêtement de surface (1) à base de polymère souple selon l'une quelconque des revendications précédentes, dans lequel les moyens de raccordement (8) forment un accouplement de type puzzle.

5. Élément de revêtement de surface (1) à base de polymère souple selon l'une quelconque des revendications précédentes, étant constitué de PVC, de polyoléfine et d'élastomère réticulé et non réticulé.

6. Élément de revêtement de surface (1) à base de polymère souple selon l'une quelconque des revendications précédentes, étant un revêtement multicouche comprenant une souche de support et une couche d'usure.

7. Élément de revêtement de surface à base de polymère souple selon l'une quelconque des revendications précédentes, dans lequel la largeur dudit élément de revêtement de surface est comprise entre 6 cm et 40 cm, de préférence entre 10 cm et 30 cm.

8. Élément de revêtement de surface à base de polymère souple selon l'une quelconque des revendications précédentes, dans lequel le rouleau (12) est enroulé sur un mandrin cylindrique (18) dans la boîte de distribution (14).

9. Élément de revêtement de surface à base de polymère souple selon l'une quelconque des revendications précédentes, dans lequel la longueur de la bande se situe dans la plage de 4 m à 30 m, de préférence de 5 m à 30 m.

10. Élément de revêtement de surface à base de polymère souple selon l'une quelconque des revendications précédentes, dans lequel sa surface inférieure ne comprend pas d'adhésif.

11. Élément de revêtement de surface à base de polymère souple selon l'une quelconque des revendications précédentes, qui est un revêtement de sol souple satisfaisant les recommandations de la norme ISO 10581.

12. Procédé d'installation d'un revêtement de surface à base de polymère souple comprenant les étapes suivantes :
prévoir un élément de revêtement de surface (1) selon l'une quelconque des revendications précédentes ;
poser ledit élément de revêtement de surface (1) en le déroulant à partir dudit rouleau (12) et en le tirant à travers ladite ouverture (16) de ladite boîte de distribution (14).
